# EUROPÄISCHE PATENTSCHRIFT

(11) **EP 3 101 281 B1**
(45) Veröffentlichungstag und Bekanntmachung des Hinweises auf die Patenterteilung: **25.09.2019**
(21) Anmeldenummer: 16169863.4
(22) Anmeldetag: 17.05.2016
(51) Int. Cl.: F15B 7/00

(54) **HYDRAULISCHE SCHALTUNG ZUR DRUCKMITTELVERSORGUNG EINES HYDRAULISCHEN VERBRAUCHERS IN EINEM GESCHLOSSENEN HYDRAULISCHEN KREIS**
HYDRAULIC CIRCUIT FOR SUPPLYING PRESSURE TO A HYDRAULIC CONSUMER IN A CLOSED HYDRAULIC CIRCUIT
CIRCUIT HYDRAULIQUE DESTINÉ À L'ALIMENTATION EN FLUIDE SOUS PRESSION D'UN CONSOMMATEUR HYDRAULIQUE DANS UN CIRCUIT HYDRAULIQUE FERMÉ

(30) Priorität: 05.06.2015 DE 102015210350
(43) Veröffentlichungstag der Anmeldung: 07.12.2016
(73) Patentinhaber: ROBERT BOSCH GMBH, 70442 Stuttgart (DE)
(72) Erfinder: Hendrix, Gottfried, 97737 Gemuenden (DE)
(74) Vertreter: Thürer, Andreas

(56) Entgegenhaltungen:
- EP-A1- 1 882 534
- DE-A1-102013 108 843
- US-A1- 2007 220 880
- US-A1- 2009 297 370
- US-B1- 7 191 593

## Beschreibung

### Gebiet der Erfindung

Die Erfindung betrifft eine hydraulische Schaltung gemäß dem Oberbegriff des Patentanspruchs 1. Weiter betrifft die Erfindung eine hydraulische Anordnung mit der erfindungsgemäßen hydraulischen Schaltung gemäß dem Oberbegriff des nebengeordneten Patentanspruchs.

### Hintergrund der Erfindung

Bei bekannten hydraulischen Schaltungen, insbesondere für als Stellantrieb verwendete hydraulische Verbraucher wie beispielsweise Fluidventile oder Rotoren von Windkraftanlagen, ist es üblich, dass die Hydraulikpumpe auch für kurzzeitige Verstellbewegungen mit hoher Dynamik oder für eine Notfallverstellung dimensioniert ist. Da dies, beispielsweise bei Einsatz eines Hydraulikzylinders als hydraulischer Verbraucher, meist sehr aufwändig mit zusätzlichen Zylinderflächen und/oder Federmechanismen realisiert wird, steht der hohe Aufwand in einem ungünstigen Verhältnis zu der eher seltenen Nutzung.

EP 1 882 534 A1 zeigt eine hydraulische Schaltung gemäß dem Oberbegriff des Anspruchs 1.

### Offenbarung der Erfindung

Dem gegenüber liegt der Erfindung die Aufgabe zu Grunde, eine hydraulische Schaltung zu schaffen, bei der die Dimensionierung einer, insbesondere als Hydraulikpumpe eingesetzten, Hydromaschine lediglich für die Stell- und/oder Regelaufgaben eines hydraulischen Verbrauchers erfolgt, und mit der trotzdem eine Verstellung mit hoher Dynamik beziehungsweise eine Notverstellung des hydraulischen Verbrauchers ausführbar ist.

Diese Aufgabe wird gelöst durch eine hydraulische Schaltung mit den Merkmalen des Patentanspruchs 1.

Weiter ist es eine Aufgabe der Erfindung, eine hydraulische Anordnung mit der erfindungsgemäßen hydraulischen Schaltung bereitzustellen, bei der die Dimensionierung einer, insbesondere als Hydraulikpumpe eingesetzten, Hydromaschine lediglich für die Stell- und/oder Regelaufgaben eines hydraulischen Verbrauchers der hydraulischen Anordnung erfolgt, und mit der trotzdem eine Verstellung mit hoher Dynamik beziehungsweise eine Notverstellung des hydraulischen Verbrauchers ausführbar ist.

Diese Aufgabe wird gelöst durch eine hydraulische Anordnung mit den Merkmalen des nebengeordneten Patentanspruchs.

Vorteilhafte Weiterbildungen der Erfindung sind in den Unteransprüchen beschrieben.

Eine hydraulische Schaltung gemäß der vorliegenden Erfindung zum Verfahren und Positionieren eines hydraulischen Verbrauchers enthält einen ersten Strömungspfad und einen zweiten Strömungspfad zur Druckmittelversorgung des hydraulischen Verbrauchers. Weiter weist sie eine Hydromaschine auf, mit der zusammen mit dem ersten Strömungspfad und dem hydraulischen Verbraucher und dem zweiten Strömungspfad ein geschlossener Hydraulikkreis bildbar ist. Die erfindungsgemäße hydraulische Schaltung enthält weiter einen, insbesondere drehzahlvariablen, Antrieb zum Antreiben der Hydromaschine. Weiter ist in der hydraulischen Schaltung gemäß der vorliegenden Erfindung eine Nachspeiseventilanordnung zum Zuführen von Druckmittel auf eine Niederdruckseite der Hydromaschine enthalten, sowie eine Druckabsicherungsventilanordnung zum Begrenzen eines Druckes in dem geschlossenen Hydraulikkreis auf einen vorbestimmten Wert und ein Druckmittelreservoir zum Zuführen von Druckmittel auf die Niederdruckseite der Hydromaschine. Fluidisch parallel zu der Hydromaschine ist eine zusätzliche Hydromaschine zum Versorgen des hydraulischen Verbrauchers mit Druckmittel vorgesehen, die mittels eines ihr zugeordneten Antriebs antreibbar ist. Insbesondere ist der Antrieb ausschließlich der zusätzlichen Hydromaschine zugeordnet.

Mit dieser erfindungsgemäßen hydraulischen Schaltung ist es möglich, die Hydromaschine lediglich für die Steuer- und/oder Regelungsaufgaben des hydraulischen Verbrauchers auszulegen, wobei Zusatzfunktionen, wie beispielsweise eine zwischenzeitliche schnelle Verstellung oder eine Notfallverstellung, mittels der zusätzlichen Hydromaschine ausübbar sind. Zum Beispiel bei Ausfall der Hydromaschine ist mittels der alleine betriebenen zusätzlichen Hydromaschine eine Notfallverstellung des hydraulischen Verbrauchers durchführbar und der hydraulische Verbraucher ist somit in eine sichere definierte Stellung bringbar. Mittels der zusammen mit der Hydromaschine betriebenen zusätzlichen Hydromaschine ist beispielsweise eine, insbesondere kurzzeitige, Schnellverstellung des hydraulischen Verbrauchers durchführbar.

Die zusätzliche Hydromaschine ist mittels einer, insbesondere entsperrbaren, Rückschlagventilanordnung, oder mittels einer Ventilanordnung, von dem geschlossenen Hydraulikkreis abkoppelbar, sobald die zusätzliche Hydromaschine nicht angetrieben ist. Somit steht die zusätzliche Hydromaschine still, wenn sie nicht angetrieben wird und benötigt keine Energie, insbesondere entzieht sie dem Hydraulikkreis keine Energie über Druckmittel, das ansonsten durch die nicht von ihrem zugeordneten Antrieb angetriebene Hydromaschine hindurchgeleitet würde.

Vorteilhafterweise ist die zusätzliche Hydromaschine mittels einer mechanischen Kupplung von dem ihr zugeordneten Antrieb trennbar.

Vorteilhafterweise enthält die Nachspeiseventilanordnung ein zwischen der Hydromaschine und dem hydraulischen Verbraucher in dem ersten Strömungspfad angeordnetes erstes entsperrbares Rückschlagventil, das von einem Druckmittel in dem zweiten Strömungspfad entsperrbar ist, und ein zwischen der Hydromaschine und dem hydraulischen Verbraucher in dem zweiten Strömungspfad angeordnetes zweites entsperrbares Rückschlagventil, das von einem Druckmittel in dem ersten Strömungspfad entsperrbar ist, wobei die entsperrbaren Rückschlagventile jeweils von dem hydraulischen Verbraucher in Richtung hin zu der Hydromaschine sperren. Insbesondere ist Druckmittel, von dem das erste entsperrbare Rückschlagventil entsperrbar ist, zwischen dem zweiten entsperrbaren Rückschlagventil und der Hydromaschine abgegriffen und Druckmittel, von dem das zweite entsperrbare Rückschlagventil entsperrbar ist, ist zwischen dem ersten entsperrbaren Rückschlagventil und der Hydromaschine abgegriffen. Somit ist gewährleistet, dass ein jeweils in dem einen Strömungspfad wirkender höherer Druck das entsprechende andere entsperrbare Rückschlagventil in dem anderen Strömungspfad entsperrt und so der Hydraulikkreis geschlossen ist, sobald die Hydromaschine Druckmittel in einen der Strömungspfade fördert.

Vorteilhafterweise enthält die Druckabsicherungsventilanordnung ein an dem ersten Strömungspfad angeschlossenes erstes Druckbegrenzungsventil, und ein an dem zweiten Strömungspfad angeschlossenes zweites Druckbegrenzungsventil. Somit ist ein in dem jeweiligen Strömungspfad wirkender Druck auf einen voreingestellten Wert begrenzbar.

Vorteilhafterweise ist das Druckmittelreservoir oder ein Ausgleichsbehälter oder ein Hydrospeicher fluidisch zwischen den Druckbegrenzungsventilen angeschlossen. Aus dem Druckmittelreservoir ist vorteilhafterweise Druckmittel von der Hydromaschine über ein fluidisch an einer ersten Fluidverbindung zwischen dem Druckmittelreservoir und dem ersten Druckbegrenzungsventil angeschlossenes erstes Nachsaugventil der hydraulischen Schaltung in den ersten Strömungspfad nachsaugbar. Weiter vorteilhafterweise ist aus dem Druckmittelreservoir Druckmittel von der Hydromaschine über ein fluidisch an einer zweiten Fluidverbindung zwischen dem Druckmittelreservoir und dem zweiten Druckbegrenzungsventil angeschlossenes zweites Nachsaugventil der hydraulischen Schaltung in den zweiten Strömungspfad nachsaugbar. Somit ist Druckmittel aus einem der Strömungspfade, in dem der darin wirkende Druck einen vorbestimmten Wert übersteigt, in das Druckmittelreservoir leitbar, da die Druckbegrenzungsventile dann eine Druckmittelverbindung zu dem Druckmittelreservoir öffnen. Insbesondere sind das erste Nachsaugventil und das zweite Nachsaugventil jeweils als Rückschlagventil ausgebildet, das in Richtung hin zu dem Druckmittelreservoir sperrt.

Vorteilhafterweise weist die Rückschlagventilanordnung ein erstes Rückschlagventil auf, über das die zusätzliche Hydromaschine an den ersten Strömungspfad angeschlossen ist und das von dem hydraulischen Verbraucher in Richtung hin zur zusätzlichen Hydromaschine sperrt. Weiter weist die Rückschlagventilanordnung ein zweites Rückschlagventil auf, über das die zusätzliche Hydromaschine an den zweiten Strömungspfad angeschlossen ist und das von dem hydraulischen Verbraucher in Richtung hin zur zusätzlichen Hydromaschine sperrt, wobei eines der Rückschlagventile von Druckmittel einer Hochdruckseite der zusätzlichen Hydromaschine entsperrbar ist. Es ist denkbar, dass das Druckmittel zum Entsperren zwischen der zusätzlichen Hydromaschine und dem nicht entsperrbaren Rückschlagventil abgegriffen ist. Dies trägt weiter zur Energieeinsparung bei, da, wie oben beschrieben, insbesondere bei Trennung der zusätzlichen Hydromaschine von dem ihr zugeordneten Antrieb mittels der mechanischen Kupplung, die zusätzliche Hydromaschine wegen der fluidischen Entkopplung von dem Hydraulikkreis keine Energie benötigt.

Vorteilhafterweise ist die zusätzliche Hydromaschine alleine, insbesondere unabhängig von der Hydromaschine, oder zusammen mit der Hydromaschine betreibbar. Mit der alleine betriebenen zusätzlichen Hydromaschine ist eine Notfallverstellung des hydraulischen Verbrauchers, beispielsweise bei Ausfall der Hydromaschine, durchführbar und der hydraulische Verbraucher in eine sichere definierte Stellung bringbar. Mit der zusammen mit der Hydromaschine betriebenen zusätzlichen Hydromaschine ist eine, insbesondere kurzzeitige, Schnellverstellung des hydraulischen Verbrauchers durchführbar; die Hydromaschine kann somit lediglich auf die Steuer- und/oder Regelungsaufgaben des hydraulischen Verbrauchers ausgelegt werden, was im Betrieb der Hydromaschine Energie spart.

Vorteilhafterweise ist die zusätzliche Hydromaschine als Hydropumpe mit konstantem Fördervolumen und/oder konstanter Drehrichtung zum Antreiben des hydraulischen Verbrauchers in einer ersten Arbeitsrichtung ausgebildet. Die zusätzliche Hydromaschine fördert dabei Druckmittel von dem ersten Strömungspfad in den zweiten Strömungspfad. Das erste Rückschlagventil ist dann von Druckmittel des zweiten Strömungspfads entsperrbar, und das Druckmittel zum Entsperren des ersten Rückschlagventils ist zwischen dem zweiten Rückschlagventil und der zusätzlichen Hydromaschine abgegriffen. Somit ist die zusätzliche Hydromaschine, sobald sie mittels dem ihr zugeordneten Antrieb angetrieben ist, über die beschriebene Rückschlagventilanordnung mit den Strömungspfaden der Hydromaschine fluidisch verbunden und sobald die zusätzliche Hydromaschine nicht mehr mittels dem ihr zugeordneten Antrieb angetrieben ist, über die beschriebene Rückschlagventilanordnung von den Strömungspfaden der Hydromaschine abgekoppelt, um Energie zu sparen.

Vorteilhafterweise ist zwischen dem ersten Rückschlagventil und der zusätzlichen Hydromaschine ein Druckmittelabgriff vorgesehen, an dem eine erste Nachsaugfluidverbindung angeschlossen ist, mittels der das Druckmittelreservoir mit der zusätzlichen Hydromaschine fluidisch verbunden ist. Weiter vorteilhaft ist die erste Nachsaugfluidverbindung mit der ersten Fluidverbindung, die zwischen dem ersten Druckbegrenzungsventil und dem Druckmittelreservoir vorgesehen ist, fluidisch verbunden. Somit ist Druckmittel von der zusätzlichen Hydromaschine aus dem Druckmittelreservoir auf eine Niederdruckseite der zusätzlichen Hydromaschine nachsaugbar. In der ersten Nachsaugfluidverbindung kann zwischen dem Druckmittelreservoir und der zusätzlichen Hydromaschine optional ein zusätzliches Nachsaugventil vorgesehen sein. Insbesondere ist das zusätzliche Nachsaugventil als Rückschlagventil ausgebildet, das in Richtung hin zu dem Druckmittelreservoir sperrt.

Vorteilhafterweise ist die zusätzliche Hydromaschine als Hydropumpe oder als Hydromotor, insbesondere jeweils mit verstellbarem Volumenstrom und/oder jeweils in veränderbarer Drehrichtung, betreibbar, wobei beide Rückschlagventile der Rückschlagventilanordnung jeweils von Druckmittel der jeweiligen Hochdruckseite der zusätzlichen Hydromaschine entsperrbar sind. Insbesondere ist das Druckmittel mittels der Hydropumpe in beide Strömungspfade förderbar beziehungsweise ist der Hydromotor über beide Strömungspfade antreibbar. Somit ist die zusätzliche Hydromaschine, sobald sie mittels dem ihr zugeordneten Antrieb angetrieben ist, über die beschriebene Rückschlagventilanordnung mit den Strömungspfaden der Hydromaschine fluidisch verbunden und sobald die zusätzliche Hydromaschine nicht mehr mittels dem ihr zugeordneten Antrieb angetrieben ist, über die beschriebene Rückschlagventilanordnung von den Strömungspfaden der Hydromaschine abgekoppelt, um Energie zu sparen - unabhängig von einer Betriebsart und/oder einer Richtung, in der die zusätzliche Hydromaschine betrieben ist.

Vorteilhafterweise ist von der zusätzlichen Hydromaschine Druckmittel über ein fluidisch zwischen dem Druckmittelreservoir und der zusätzlichen Hydromaschine angeordnetes zusätzliches Nachsaugventil, insbesondere über ein Rückschlagventil, das von der zusätzlichen Hydromaschine in Richtung hin zu dem Druckmittelreservoir sperrt, in eine Niederdruckseite der zusätzlichen Hydromaschine nachsaugbar. Insbesondere ist je nach Arbeitsrichtung des hydraulischen Verbrauchers für jede Niederdruckseite der zusätzlichen Hydromaschine je ein zusätzliches Nachsaugventil zwischen dem Druckmittelreservoir und der zusätzlichen Hydromaschine angeordnet, über das in die jeweilige Niederdruckseite Druckmittel aus dem Druckmittelreservoir nachsaugbar ist. Somit ist - unabhängig von der Richtung, in der die zusätzliche Hydromaschine betrieben ist - gewährleistet, dass ausreichend Druckmittel auf der Niederdruckseite zur Verfügung steht und Kavitation somit im Wesentlichen vermeidbar ist.

Vorteilhafterweise ist zwischen dem ersten Rückschlagventil und der zusätzlichen Hydromaschine ein Druckmittelabgriff vorgesehen, an dem eine erste Nachsaugfluidverbindung angeschlossen ist, mittels der das Druckmittelreservoir mit der zusätzlichen Hydromaschine fluidisch verbunden ist. Weiter vorteilhaft ist die erste Nachsaugfluidverbindung mit der ersten Fluidverbindung, die zwischen dem ersten Druckbegrenzungsventil und dem Druckmittelreservoir vorgesehen ist, fluidisch verbunden. Vorteilhafterweise ist in der ersten Nachsaugfluidverbindung zwischen dem Druckmittelreservoir und der zusätzlichen Hydromaschine ein erstes zusätzliches Nachsaugventil vorgesehen. Insbesondere ist das erste zusätzliche Nachsaugventil als Rückschlagventil ausgebildet, das in Richtung hin zu dem Druckmittelreservoir sperrt. Weiter vorteilhaft ist zwischen dem zweiten Rückschlagventil und der zusätzlichen Hydromaschine ein Druckmittelabgriff vorgesehen, an dem eine zweite Nachsaugfluidverbindung angeschlossen ist, mittels der das Druckmittelreservoir mit der zusätzlichen Hydromaschine fluidisch verbunden ist. Weiter vorteilhaft ist die zweite Nachsaugfluidverbindung mit der zweiten Fluidverbindung, die zwischen dem zweiten Druckbegrenzungsventil und dem Druckmittelreservoir vorgesehen ist, fluidisch verbunden. Vorteilhafterweise ist in der zweiten Nachsaugfluidverbindung zwischen dem Druckmittelreservoir und der zusätzlichen Hydromaschine ein zweites zusätzliches Nachsaugventil angeordnet. Insbesondere ist das zusätzliche Nachsaugventil als Rückschlagventil ausgebildet, das in Richtung hin zu dem Druckmittelreservoir sperrt. Somit ist unabhängig von der Betriebsart und/oder der Richtung, in der die zusätzliche Hydromaschine betrieben ist, Druckmittel aus dem Druckmittelreservoir in die jeweilige Niederdruckseite der zusätzlichen Hydromaschine nachsaugbar.

Vorteilhafterweise ist der der zusätzlichen Hydromaschine zugeordnete Antrieb als ein Elektromotor, ein Hydromotor, ein kinetischer Speicher, oder ein rotierendes Maschinenbauteil ausgebildet. In dem kinetischen Speicher ist vorteilhaft eine kinetische Energie speicherbar, die wieder abrufbar ist als eine Drehbewegung, gegebenenfalls mittels einer geeigneten Bewegungsumformeinrichtung. Das rotierende Maschinenbauteil kann beispielsweise ein Rotor einer Windkraftanlage oder ein dadurch in Rotation versetztes Bauteil sein. Somit ist der Antrieb der zusätzlichen Hydromaschine auf einfache und/oder energiesparende Weise ermöglicht.

Vorteilhafterweise ist zwischen der mechanischen Kupplung und dem der zusätzlichen Hydromaschine zugeordneten Antrieb ein Getriebe vorgesehen. Somit ist eine Drehzahlanpassung der zusätzlichen Hydromaschine an unterschiedliche Betriebsbedingungen möglich.

Eine hydraulische Anordnung enthält die erfindungsgemäße hydraulische Schaltung, wobei die hydraulische Schaltung einen hydraulischen Verbraucher aufweist, der mittels der hydraulischen Schaltung mit Druckmittel versorgbar ist.

Somit ist eine hydraulische Anordnung bereitgestellt, bei der die, insbesondere als Hydraulikpumpe eingesetzte, Hydromaschine lediglich für die Stell- und/oder Regelaufgaben eines hydraulischen Verbrauchers der hydraulischen Anordnung dimensionierbar ist, wobei trotzdem eine zwischenzeitliche Verstellung mit hoher Dynamik beziehungsweise eine Notverstellung des hydraulischen Verbrauchers ausführbar ist.

Vorteilhafterweise ist der hydraulische Verbraucher als ein Gleichgangzylinder ausgebildet. Somit ergibt sich in beide Arbeitsrichtungen des hydraulischen Verbrauchers eine gleich große Geschwindigkeit. Alternativ dazu ist der hydraulische Verbraucher als ein Differentialzylinder ausgebildet, gegebenenfalls mit einer Ausgleichseinrichtung zum Ausgleichen beziehungsweise Berücksichtigen der bei den verschiedenen Arbeitsrichtungen unterschiedlichen Kolbengeschwindigkeiten.

Vorteilhafterweise ist die hydraulische Anordnung in einer Windkraftanlage zur Verstellung von Rotoren beziehungsweise der Rotorblätter, insbesondere zur Pitchverstellung, eingesetzt. Denkbar ist auch, dass die hydraulische Anordnung als Stellantrieb für Fluidventile eingesetzt ist, insbesondere als Regelantrieb von Dampfventilen in einem Kraftwerk. Somit ist die erfindungsgemäße hydraulische Anordnung als ein energieeffizienter und kostengünstiger Stellantrieb wirtschaftlich sinnvoller eingesetzt.

### Kurze Beschreibung der Zeichnungen

Mehrere Ausführungsbeispiele der Erfindung werden im Folgenden anhand schematischer Zeichnungen näher erläutert. Es zeigen:
Figur 1 eine erfindungsgemäße hydraulische Schaltung mit einem hydraulischen Verbraucher im Querschnitt, gemäß einem ersten Ausführungsbeispiel, und
Figur 2 eine erfindungsgemäße hydraulische Schaltung mit einem hydraulischen Verbraucher im Querschnitt, gemäß einem zweiten Ausführungsbeispiel.

### Detaillierte Beschreibung der dargestellten Ausführungsformen

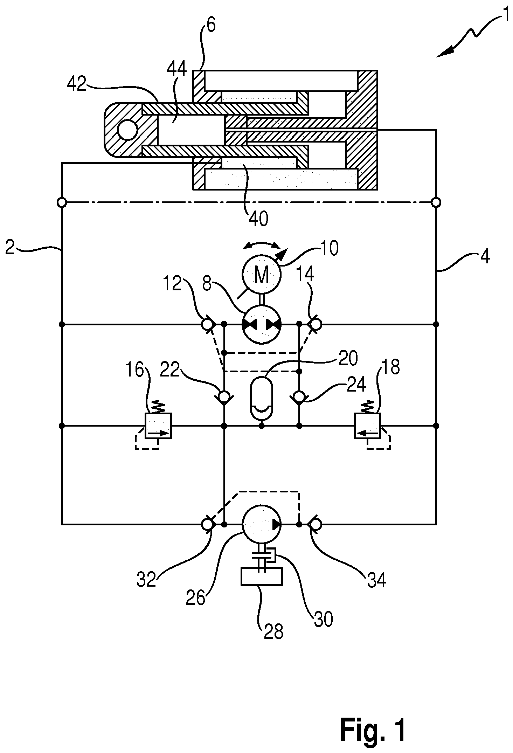

Die in Figur 1 dargestellte hydraulische Schaltung 1 hat einen ersten Strömungspfad 2 und einen zweiten Strömungspfad 4 zur Druckmittelversorgung eines hydraulischen Verbrauchers 6, hier eines Gleichgangzylinders, die zusammen mit einer Hydromaschine zum Antrieb des hydraulischen Verbrauchers 6 einen geschlossenen Hydraulikkreis bilden. Die Hydromaschine 8 ist von einem Antrieb 10, hier einem drehzahlregelbaren und drehrichtungsumkehrbaren Elektromotor, antreibbar.

In dem geschlossenen Hydraulikkreis ist eine Nachspeiseventilanordnung 12, 14 zum Zuführen von Druckmittel auf eine Niederdruckseite der Hydromaschine 8 enthalten, die ein in dem ersten Strömungspfad 2 angeordnetes erstes entsperrbares Rückschlagventil 12 aufweist, das in Richtung hin zu der Hydromaschine 8 sperrt. In dem zweiten Strömungspfad 4 ist ein zweites entsperrbares Rückschlagventil 14 der Nachspeiseventilanordnung 12, 14 enthalten, das in Richtung hin zu der Hydromaschine 8 sperrt. Das Druckmittel, mit dem das erste entsperrbare Rückschlagventil 12 entsperrbar ist, ist zwischen dem zweiten entsperrbaren Rückschlagventil 14 und der Hydromaschine 8 abgegriffen und das Druckmittel, mit dem das zweite entsperrbare Rückschlagventil 14 entsperrbar ist, ist zwischen dem ersten entsperrbaren Rückschlagventil 12 und der Hydromaschine 8 abgegriffen.

Eine Druckabsicherungsventilanordnung 16, 18 enthält ein erstes Druckbegrenzungsventil 16, das an den ersten Strömungspfad 2 angeschlossen ist und ein zweites Druckbegrenzungsventil 18, das an den zweiten Strömungspfad 4 angeschlossen ist.

Zwischen dem Druckmittelreservoir 20 und dem ersten Druckbegrenzungsventil 16 ist in einer Druckmittelverbindung zu der Hydromaschine 8 ein erstes Nachsaugventil 22 vorgesehen, hier ein Rückschlagventil, das in Richtung hin zu dem Druckmittelreservoir 20 sperrt. Zwischen dem Druckmittelreservoir 20 und dem zweiten Druckbegrenzungsventil 18 ist in einer Druckmittelverbindung zu der Hydromaschine 8 ein zweites Nachsaugventil 24 vorgesehen, hier ein Rückschlagventil, das in Richtung hin zu dem Druckmittelreservoir 20 sperrt.

Zwischen dem ersten Strömungspfad 2 und dem zweiten Strömungspfad 4 ist fluidisch parallel zu der Hydromaschine 8 eine zusätzliche Hydromaschine 26 angeschlossen, mittels der der hydraulische Verbraucher 6 mit Druckmittel versorgbar ist. Die zusätzliche Hydromaschine 26 ist mittels eines ihr zugeordneten Antriebs 28 antreibbar und über eine mechanische Kupplung 30 mit dem Antrieb 28 koppelbar, der als ein Elektromotor, ein Hydromotor, ein kinetischer Speicher, oder ein rotierendes Maschinenbauteil ausgebildet sein kann. Ist der Antrieb 28 als Energiespeicher ausgebildet, ist es beispielsweise möglich, selbst bei Ausfall der elektrischen Energieversorgung den hydraulischen Verbraucher 6 in eine gewünschte Position zu verstellen. Hier ist die zusätzliche Hydromaschine 26 als eine Hydropumpe mit konstantem Volumenstrom und konstanter Drehrichtung zum Antreiben des hydraulischen Verbrauchers 6 in einer ersten Arbeitsrichtung ausgebildet.

Zwischen der zusätzlichen Hydromaschine 26 und dem ersten Strömungspfad 2 ist ein erstes Rückschlagventil 32 angeordnet, das in Richtung hin zu der zusätzlichen Hydromaschine 26 sperrt. Zwischen der zusätzlichen Hydromaschine 26 und dem zweiten Strömungspfad 4 ist ein zweites Rückschlagventil 34 angeordnet, das in Richtung hin zu der zusätzlichen Hydromaschine 26 sperrt. Das erste Rückschlagventil 32 ist von einem Druckmittel entsperrbar, das zwischen dem zweiten Rückschlagventil 34 und der zusätzlichen Hydromaschine 26 abgegriffen ist.

Das Druckmittelreservoir 20 ist mittels einer ersten Nachsaugfluidverbindung, die zwischen einem Druckmittelabgriff zwischen dem ersten Rückschlagventil 32 und der zusätzlichen Hydromaschine 26 angeschlossen ist, fluidisch mit der zusätzlichen Hydromaschine 26 verbunden. In der ersten Nachsaugfluidverbindung kann optional ein zusätzliches Nachsaugventil (nicht dargestellt) angeordnet sein. Insbesondere ist das zusätzliche Nachsaugventil als Rückschlagventil ausgebildet, das in Richtung hin zu dem Druckmittelreservoir 20 sperrt. Das Druckmittelreservoir 20 ist mittels einer zweiten Nachsaugfluidverbindung, die zwischen einem Druckmittelabgriff zwischen dem zweiten Rückschlagventil 34 und der zusätzlichen Hydromaschine 26 angeschlossen ist, fluidisch mit der zusätzlichen Hydromaschine 26 verbunden.

Nachfolgend ist die Funktionsweise der erfindungsgemäßen hydraulischen Schaltung 1 kurz erklärt.

Wird Druckmittel von der Hydromaschine 8 in den ersten Strömungspfad 2 gefördert, gelangt das Druckmittel über das erste entsperrbare Rückschlagventil 12 zu einem ersten Arbeitsraum 40 des hydraulischen Verbrauchers 6 und treibt ihn in der ersten Arbeitsrichtung an. In dem dargestellten ersten Ausführungsbeispiel fährt eine Kolbenstange 42 des Gleichgangzylinders 6 ein. Druckmittel wird aus einem zweiten Arbeitsraum 44 des Gleichgangzylinders 6 in den zweiten Strömungspfad 4 verdrängt und gelangt über das entsperrte zweite Rückschlagventil 14 zurück zu der Hydromaschine 8. Über das zweite Nachsaugventil 24 ist bei Bedarf Druckmittel aus dem Druckmittelreservoir 20 in eine Niederdruckseite der Hydromaschine 8 nachsaugbar.

Wird Druckmittel von der Hydromaschine 8 in den zweiten Strömungspfad 4 gefördert, gelangt das Druckmittel über das zweite entsperrbare Rückschlagventil 14 zu dem zweiten Arbeitsraum 44 des hydraulischen Verbrauchers 6 und treibt ihn in einer zweiten Arbeitsrichtung an, die Kolbenstange 42 des Gleichgangzylinders 6 fährt aus.

Das erste Druckbegrenzungsventil 16 und das zweite Druckbegrenzungsventil 18 begrenzen dabei einen in den Strömungspfaden 2, 4 wirkenden Druck auf einen vorbestimmten Wert. Übersteigt der jeweilige Druck den jeweils vorbestimmten Wert, wird das Druckmittel in ein zwischen den beiden Druckbegrenzungsventilen 16, 18 angeschlossenes Druckmittelreservoir 20, hier ein Druckmittelreservoir, geleitet und so der Druck in dem jeweiligen Strömungspfad 2, 4 begrenzt.

Soll nun kurzzeitig eine Bewegung des Gleichgangzylinders 6 mit erhöhter Geschwindigkeit ausgeführt werden, wird die zusätzliche Hydromaschine 26 über die mechanische Kupplung 30 mit dem ihr zugeordneten Antrieb 28 gekoppelt und zusätzliches Druckmittel in den der gewünschten Arbeitsrichtung des Gleichgangzylinders 6 entsprechenden Strömungspfad 2, 4 gefördert. Die zusätzliche Hydromaschine 26 arbeitet dabei mit der Hydromaschine 8 zusammen. Druckmittel gelangt beispielsweise über das erste Rückschlagventil 32 oder über das erste Nachsaugventil 22 in den ersten Strömungspfad 2 und von da in den ersten Arbeitsraum 40.

Soll die Bewegung des Gleichgangzylinders 6 mit erhöhter Geschwindigkeit beendet werden, wird der der zusätzlichen Hydromaschine 26 zugeordnete Antrieb 28 ausgeschaltet und/oder die zusätzliche Hydromaschine 26 über die mechanische Kupplung 30 von dem ihr zugeordneten Antrieb 28 entkoppelt. Somit ist die zusätzliche Hydromaschine 26 über die Rückschlagventilanordnung 32, 34 von dem geschlossenen Hydraulikkreis beziehungsweise von den Strömungspfaden 2, 4 fluidisch entkoppelt.

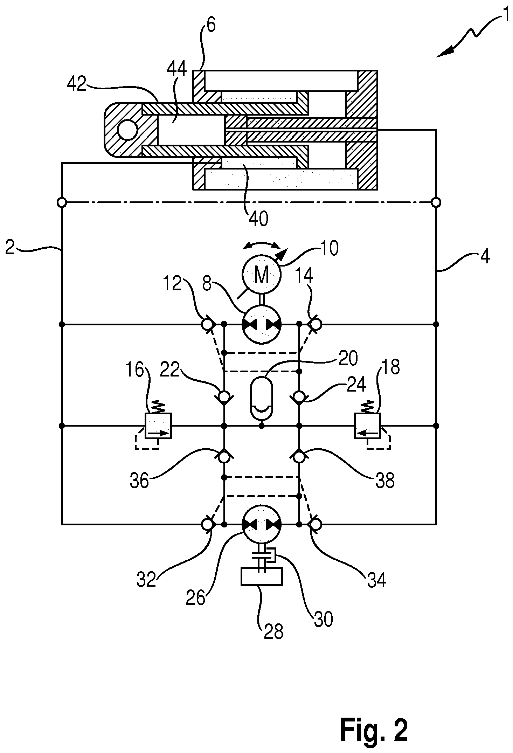

Das in Figur 2 dargestellte zweite Ausführungsbeispiel der erfindungsgemäßen hydraulischen Schaltung unterscheidet sich von dem oben beschriebenen und in Figur 1 dargestellten ersten Ausführungsbeispiel dadurch, dass die zusätzliche Hydromaschine 8 als Hydropumpe oder als Hydromotor in unterschiedlichen Drehrichtungen betreibbar ist und dass beide Rückschlagventile 32, 34 der Rückschlagventilanordnung 32, 34 entsperrbar sind. Beide Rückschlagventile 32, 34 sind jeweils von Druckmittel der jeweiligen Hochdruckseite der zusätzlichen Hydromaschine 26 entsperrbar. Weiter sind zusätzliche Nachsaugventile 36, 38 vorgesehen. Ein erstes zusätzliches Nachsaugventil 36 ist in der ersten Nachsaugfluidverbindung, die zwischen dem ersten Nachsaugventil 22 und dem Druckmittelabgriff zwischen dem ersten Rückschlagventil 32 und der zusätzlichen Hydromaschine 26 vorgesehen ist, angeordnet, wobei die erste Nachsaugfluidverbindung mit einer ersten Fluidverbindung, die zwischen dem ersten Druckbegrenzungsventil 16 und dem Druckmittelreservoir 20 vorgesehen ist, fluidisch verbunden ist. Das erste zusätzliche Nachsaugventil 36, hier als Rückschlagventil ausgebildet, sperrt in Richtung hin zu dem Druckmittelreservoir 20.

Ein zweites zusätzliches Nachsaugventil 38 ist in einer zweiten Nachsaugfluidverbindung, die zwischen dem zweiten Nachsaugventil 24 und einem Druckmittelabgriff zwischen dem zweiten Rückschlagventil 34 und der zusätzlichen Hydromaschine 26 vorgesehen ist, angeordnet, wobei die zweite Nachsaugfluidverbindung mit einer zweiten Fluidverbindung, die zwischen dem zweiten Druckbegrenzungsventil 18 und dem Druckmittelreservoir 20 vorgesehen ist, fluidisch verbunden ist. Das zweite zusätzliche Nachsaugventil 38, hier als Rückschlagventil ausgebildet, sperrt in Richtung hin zu dem Druckmittelreservoir 20.

Somit ist - unabhängig von der Richtung, in der die zusätzliche Hydromaschine 26 betrieben ist - gewährleistet, dass Druckmittel bei Betrieb der zusätzlichen Hydromaschine 26 in den jeweiligen Strömungspfad 2, 4 gelangt beziehungsweise von dem jeweiligen Strömungspfad 2, 4 zu der zusätzlichen Hydromaschine 26 zurück gelangt, dass ausreichend Druckmittel auf der Niederdruckseite der zusätzlichen Hydromaschine 26 zur Verfügung steht und Kavitation somit im Wesentlichen vermeidbar ist, und dass bei Nicht-Betrieb der zusätzlichen Hydromaschine 26 die zusätzliche Hydromaschine 26 über die Rückschlagventilanordnung 32, 34 von dem geschlossenen Hydraulikkreis beziehungsweise von den Strömungspfaden 2, 4 fluidisch entkoppelt ist.

Offenbart ist eine hydraulische Schaltung, bei der ein Regelmotor eine Hydromaschine antreibt, die ihrerseits einen Gleichgangzylinder oder einen Differentialzylinder antreibt. Der Antrieb ist lediglich auf die Stell- und/oder Regelaufgaben ausgelegt, da kurzzeitige schnelle Bewegungen und/oder eine Notfallverstellung des Hydraulikzylinders von einer zusätzlichen Hydromaschine unterstützt beziehungsweise ausgeführt werden. Die zusätzliche Hydromaschine ist fluidisch parallel zu der Hydromaschine angeordnet und vorteilhafterweise bei Nicht-Betrieb über eine Rückschlagventilanordnung fluidisch von dem geschlossenen Hydraulikkreis der Hydromaschine abkoppelbar. Weiter ist die zusätzliche Hydromaschine vorteilhaft über eine mechanische Kupplung von dem ihr zugeordneten Antrieb entkoppelbar.

### Bezugszeichenliste

- 1: hydraulische Schaltung
- 2: erster Strömungspfad
- 4: zweiter Strömungspfad
- 6: hydraulischer Verbraucher (Gleichgangzylinder)
- 8: Hydromaschine
- 10: Antrieb
- 12: erstes entsperrbares Rückschlagventil
- 14: zweites entsperrbares Rückschlagventil
- 16: erstes Druckbegrenzungsventil
- 18: zweites Druckbegrenzungsventil
- 20: Druckmittelreservoir
- 22: erstes Nachsaugventil
- 24: zweites Nachsaugventil
- 26: zusätzliche Hydromaschine
- 28: der zusätzlichen Hydromaschine zugeordneter Antrieb
- 30: mechanische Kupplung
- 32: erstes Rückschlagventil
- 34: zweites Rückschlagventil
- 36: erstes zusätzliches Nachsaugventil
- 38: zweites zusätzliches Nachsaugventil
- 40: erster Arbeitsraum
- 42: Kolbenstange
- 44: zweiter Arbeitsraum

## Patentansprüche

1. Hydraulische Schaltung zum Verfahren und Positionieren eines hydraulischen Verbrauchers (6), mit einem hydraulischen Verbraucher (6), mit einem ersten Strömungspfad (2) und einem zweiten Strömungspfad (4) zur Druckmittelversorgung des hydraulischen Verbrauchers (6), und einer Hydromaschine (8), mit der zusammen mit dem ersten Strömungspfad (2) und dem hydraulischen Verbraucher (6) und dem zweiten Strömungspfad (4) ein geschlossener Hydraulikkreis bildbar ist, und einem Antrieb (10) zum Antreiben der Hydromaschine (8), und einer Nachspeiseventilanordnung (12, 14) zum Zuführen von Druckmittel auf eine Niederdruckseite der Hydromaschine (8), und einer Druckabsicherungsventilanordnung (16, 18) zum Begrenzen eines Druckes in dem geschlossenen Hydraulikkreis auf einen vorbestimmten Wert, und einem Druckmittelreservoir (20) zum Zuführen von Druckmittel auf die Niederdruckseite der Hydromaschine (8), wobei fluidisch parallel zu der Hydromaschine (8) eine zusätzliche Hydromaschine (26) zum Versorgen des hydraulischen Verbrauchers (6) mit Druckmittel vorgesehen ist, die mittels eines ihr zugeordneten Antriebs (28) antreibbar ist, **dadurch gekennzeichnet, dass** die zusätzliche Hydromaschine (26) mittels einer Ventilanordnung (32, 24) von dem geschlossenen Hydraulikkreis abkoppelbar ist, sobald sie nicht angetrieben ist.

2. Hydraulische Schaltung nach Anspruch 1, wobei die zusätzliche Hydromaschine (8) mittels einer mechanischen Kupplung (30) von dem ihr zugeordneten Antrieb (28) trennbar ist.

3. Hydraulische Schaltung nach dem Anspruch 1 oder 2, wobei die Nachspeiseventilanordnung (12, 14) ein zwischen der Hydromaschine (8) und dem hydraulischen Verbraucher (6) in dem ersten Strömungspfad (2) angeordnetes erstes entsperrbares Rückschlagventil (12) enthält, das von einem Druckmittel in dem zweiten Strömungspfad (4) entsperrbar ist, und ein zwischen der Hydromaschine (8) und dem hydraulischen Verbraucher (6) in dem zweiten Strömungspfad (4) angeordnetes zweites entsperrbares Rückschlagventil (14) enthält, das von einem Druckmittel in dem ersten Strömungspfad (2) entsperrbar ist, wobei die entsperrbaren Rückschlagventile (12, 14) jeweils von dem hydraulischen Verbraucher (6) in Richtung hin zu der Hydromaschine (8) sperren.

4. Hydraulische Schaltung nach einem der vorhergehenden Ansprüche, wobei die Druckabsicherungsventilanordnung (16, 18) ein an dem ersten Strömungspfad (2) angeschlossenes erstes Druckbegrenzungsventil (16) enthält, und ein an dem zweiten Strömungspfad (4) angeschlossenes zweites Druckbegrenzungsventil (18) enthält.

5. Hydraulische Schaltung nach einem der vorhergehenden Ansprüche, wobei das Druckmittelreservoir (20) fluidisch zwischen den Druckbegrenzungsventilen (16, 18) angeschlossen ist, wobei aus dem Druckmittelreservoir (20) Druckmittel von der Hydromaschine (8) über ein fluidisch zwischen dem Druckmittelreservoir (20) und dem ersten Druckbegrenzungsventil (16) angeschlossenes erstes Nachsaugventil (22) der hydraulischen Schaltung in den ersten Strömungspfad (2) nachsaugbar ist, und aus dem Druckmittel von der Hydromaschine (8) über ein fluidisch zwischen dem Druckmittelreservoir (20) und dem zweiten Druckbegrenzungsventil (18) angeschlossenes zweites Nachsaugventil (24) der hydraulischen Schaltung in den zweiten Strömungspfad (4) nachsaugbar ist.

6. Hydraulische Schaltung nach einem der Ansprüche 1 bis 5, wobei die Ventilanordnung (32, 34) eine Rückschlagventilanordnung (32, 34) ist und ein erstes Rückschlagventil (32) aufweist, über das die zusätzliche Hydromaschine (8) an den ersten Strömungspfad (2) angeschlossen ist und das von dem hydraulischen Verbraucher (6) in Richtung hin zur zusätzlichen Hydromaschine (26) sperrt, und ein zweites Rückschlagventil (34) aufweist, über das die zusätzliche Hydromaschine (26) an den zweiten Strömungspfad (4) angeschlossen ist und das von dem hydraulischen Verbraucher (6) in Richtung hin zur zusätzlichen Hydromaschine (26) sperrt, und wobei eines der Rückschlagventile (32, 34) von Druckmittel einer Hochdruckseite der zusätzlichen Hydromaschine (26) entsperrbar ist.

7. Hydraulische Schaltung nach Anspruch 6, wobei die zusätzliche Hydromaschine (26) als Hydropumpe mit konstantem Fördervolumen und konstanter Drehrichtung zum Antreiben des hydraulischen Verbrauchers (6) in einer ersten Arbeitsrichtung ausgebildet ist, wobei das erste Rückschlagventil (32) von Druckmittel des zweiten Strömungspfads (4) entsperrbar ist.

8. Hydraulische Schaltung nach Anspruch 6, wobei die zusätzliche Hydromaschine (26) als Hydropumpe oder als Hydromotor betreibbar ist, und wobei beide Rückschlagventile (32, 34) der Rückschlagventilanordnung (32, 34) jeweils von Druckmittel der jeweiligen Hochdruckseite der zusätzlichen Hydromaschine (26) entsperrbar sind.

9. Hydraulische Schaltung nach einem der Ansprüche 5 bis 8, wobei von der zusätzlichen Hydromaschine (26) Druckmittel über ein fluidisch zwischen dem Druckmittelreservoir (20) und der zusätzlichen Hydromaschine (26) angeordnetes zusätzliches Nachsaugventil (36, 38) in eine Niederdruckseite der zusätzlichen Hydromaschine (26) nachsaugbar ist.

10. Hydraulische Schaltung nach einem der vorhergehenden Ansprüche, wobei der der zusätzlichen Hydromaschine (26) zugeordnete Antrieb (28) als ein Elektromotor, ein Hydromotor, ein kinetischer Speicher, oder ein rotierendes Maschinenbauteil ausgebildet ist.

11. Hydraulische Schaltung nach einem der Ansprüche 2 bis 10, wobei zwischen der mechanischen Kupplung (30) und dem der zusätzlichen Hydromaschine (26) zugeordneten Antrieb (28) ein Getriebe vorgesehen ist.

12. Hydraulische Anordnung mit der hydraulischen Schaltung nach einem der Ansprüche 1 bis 11, **dadurch gekennzeichnet, dass** die hydraulische Schaltung einen hydraulischen Verbraucher (6) aufweist, der mittels der hydraulischen Schaltung mit Druckmittel versorgbar ist.

13. Hydraulische Anordnung nach Anspruch 12, wobei der hydraulische Verbraucher (6) als ein Gleichgangzylinder ausgebildet ist.

14. Verwendung einer hydraulischen Anordnung nach Anspruch 12 oder 13, wobei die hydraulische Anordnung in einer Windkraftanlage zur Verstellung von Rotoren der Windkraftanlage eingesetzt ist, oder wobei die hydraulische Anordnung als Stellantrieb für Fluidventile eingesetzt ist.

## Claims

1. Hydraulic circuit for moving and positioning a hydraulic consumer (6), having a hydraulic consumer (6), having a first flow path (2) and a second flow path (4) for supplying the hydraulic consumer (6) with pressure medium supply, and a hydraulic machine (8), by way of which, together with the first flow path (2), the hydraulic consumer (6) and the second flow path (4), a closed hydraulic circuit can be formed, and a drive (10) for driving the hydraulic machine (8), and a replenishing valve arrangement (12, 14) for feeding pressure medium to a low pressure side of the hydraulic machine (8), and a pressure protection valve arrangement (16, 18) for limiting a pressure in the closed hydraulic circuit to a predefined value, and a pressure medium reservoir (20) for feeding pressure medium to the low pressure side of the hydraulic machine (8), an additional hydraulic machine (26) for supplying the hydraulic consumer (6) with pressure medium being provided fluidically in parallel with the hydraulic machine (8), which additional hydraulic machine (26) can be driven by means of a drive (28) which is assigned to it, **characterized in that** the additional hydraulic machine (26) can be decoupled from the closed hydraulic circuit by means of a valve arrangement (32, 24) as soon as it is not driven.

2. Hydraulic circuit according to Claim 1, it being possible for the additional hydraulic machine (8) to be disconnected by means of a mechanical coupling (30) from the drive (28) which is assigned to it.

3. Hydraulic circuit according to Claim 1 or 2, the replenishing valve arrangement (12, 14) comprising a first unlockable check valve (12) which is arranged in the first flow path (2) between the hydraulic machine (8) and the hydraulic consumer (6) and can be unlocked by a pressure medium in the second flow path (4), and comprising a second unlockable check valve (14) which is arranged in the second flow path (4) between the hydraulic machine (8) and the hydraulic consumer (6) and can be unlocked by a pressure medium in the first flow path (2), the unlockable check valves (12, 14) locking in each case from the hydraulic consumer (6) in the direction of the hydraulic machine (8).

4. Hydraulic circuit according to one of the preceding claims, the pressure protection valve arrangement (16, 18) comprising a first pressure relief valve (16) which is connected to the first flow path (2), and comprising a second pressure relief valve (18) which is connected to the second flow path (4).

5. Hydraulic circuit according to one of the preceding claims, the pressure medium reservoir (20) being connected fluidically between the pressure relief valves (16, 18), it being possible for pressure medium to be replenished by the hydraulic machine (8) from the pressure medium reservoir (20) into the first flow path (2) via a first replenishing valve (22) of the hydraulic circuit, which first replenishing valve (22) is connected fluidically between the pressure medium reservoir (20) and the first pressure relief valve (16), and it being possible for pressure medium to be replenished by the hydraulic machine (8) from the into the second flow path (4) via a second replenishing valve (24) of the hydraulic circuit, which second replenishing valve (24) is connected fluidically between the pressure medium reservoir (20) and the second pressure relief valve (18).

6. Hydraulic circuit according to one of Claims 1 to 5, the valve arrangement (32, 34) being a check valve arrangement (32, 34) and having a first check valve (32), via which the additional hydraulic machine (8) is connected to the first flow path (2), and which first check valve (32) locks from the hydraulic consumer (6) in the direction of the additional hydraulic machine (26), and having a second check valve (34), via which the additional hydraulic machine (26) is connected to the second flow path (4), and which second check valve (34) locks from the hydraulic consumer (6) in the direction of the additional hydraulic machine (26), and it being possible for one of the check valves (32, 34) to be unlocked by pressure medium of a high pressure side of the additional hydraulic machine (26).

7. Hydraulic circuit according to Claim 6, the additional hydraulic machine (26) being configured as a hydraulic pump with a constant delivery volume and a constant rotational direction for driving the hydraulic consumer (6) in a first operating direction, it being possible for the first check valve (32) to be unlocked by pressure medium of the second flow path (4).

8. Hydraulic circuit according to Claim 6, it being possible for the additional hydraulic machine (26) to be operated as a hydraulic pump or as a hydraulic motor, and it being possible for the two check valves (32, 34) of the check valve arrangement (32, 34) to be unlocked in each case by pressure medium of the respective high pressure side of the additional hydraulic machine (26).

9. Hydraulic circuit according to one of Claims 5 to 8, it being possible for pressure medium to be replenished into a low pressure side of the additional hydraulic machine (26) by the additional hydraulic machine (26) via an additional replenishing valve (36, 38) which is arranged fluidically between the pressure medium reservoir (20) and the additional hydraulic machine (26).

10. Hydraulic circuit according to one of the preceding claims, the drive (28) which is assigned to the additional hydraulic machine (26) being configured as an electric motor, a hydraulic motor, a kinetic store or a rotating machine component.

11. Hydraulic circuit according to one of Claims 2 to 10, a transmission being provided between the mechanical coupling (30) and the drive (28) which is assigned to the additional hydraulic machine (26).

12. Hydraulic arrangement having the hydraulic circuit according to one of Claims 1 to 11, **characterized in that** the hydraulic circuit has a hydraulic consumer (6) which can be supplied with pressure medium by means of the hydraulic circuit.

13. Hydraulic arrangement according to Claim 12, the hydraulic consumer (6) being configured as a synchronous cylinder.

14. Use of a hydraulic arrangement according to Claim 12 or 13, the hydraulic arrangement being arranged in a wind power plant for the adjustment of rotors of the wind power plant, or the hydraulic arrangement being used as an actuating drive for fluid valves.

## Revendications

1. Circuit hydraulique servant au déplacement et au positionnement d'un consommateur hydraulique (6), comprenant un consommateur hydraulique (6), un premier trajet d'écoulement (2) et un deuxième trajet d'écoulement (4) pour l'alimentation en fluide sous pression du consommateur hydraulique (6), et une machine hydraulique (8), avec laquelle peut être formé, conjointement avec le premier trajet d'écoulement (2) et le consommateur hydraulique (6) et le deuxième trajet d'écoulement (4), un circuit hydraulique fermé, et un entraînement (10) servant à l'entraînement de la machine hydraulique (8), et un ensemble de soupapes de réalimentation (12, 14) pour l'acheminement du fluide sous pression sur un côté basse pression de la machine hydraulique (8), et un ensemble de soupapes de protection contre la pression (16, 18) servant à limiter une pression dans le circuit hydraulique fermé à une valeur prédéfinie, et un réservoir de fluide sous pression (20) pour l'acheminement de fluide sous pression sur le côté basse pression de la machine hydraulique (8), dans lequel une machine hydraulique supplémentaire (26) servant à l'alimentation du consommateur hydraulique (6) en fluide sous pression est prévue de manière fluidiquement parallèle à la machine hydraulique (8), laquelle machine hydraulique supplémentaire peut être entraînée au moyen d'un entraînement (28) associé à celle-ci, **caractérisé en ce que** la machine hydraulique supplémentaire (26) peut, au moyen d'un ensemble de soupapes (32, 24), être désaccouplée du circuit hydraulique fermé dès qu'elle n'est pas entraînée.

2. Circuit hydraulique selon la revendication 1, dans lequel la machine hydraulique supplémentaire (8) peut, au moyen d'un accouplement mécanique (30), être séparée de l'entraînement (28) associé à celle-ci.

3. Circuit hydraulique selon la revendication 1 ou 2, dans lequel l'ensemble de soupapes de réalimentation (12, 14) comporte une première soupape anti-retour (12) pouvant être débloquée disposée entre la machine hydraulique (8) et le consommateur hydraulique (6) dans le premier trajet d'écoulement (2), laquelle première soupape anti-retour peut être débloquée par un fluide sous pression dans le deuxième trajet d'écoulement (4), et une deuxième soupape anti-retour (14) pouvant être débloquée disposée entre la machine hydraulique (8) et le consommateur hydraulique (6) dans le deuxième trajet d'écoulement (4), laquelle deuxième soupape anti-retour peut être débloquée par un fluide sous pression dans le deuxième trajet d'écoulement (2), dans lequel les soupapes anti-retour (12, 14) pouvant être débloquées sont bloquées respectivement en direction de la machine hydraulique (8) par le consommateur hydraulique (6).

4. Circuit hydraulique selon l'une des revendications précédentes, dans lequel l'ensemble de soupapes de protection contre la pression (16, 18) comporte une première soupape de limitation de pression (16) raccordée au premier trajet d'écoulement (2), et une deuxième soupape de limitation de pression (4) raccordée au deuxième trajet d'écoulement (18).

5. Circuit hydraulique selon l'une des revendications précédentes, dans lequel le réservoir de fluide sous pression (20) est raccordé fluidiquement entre les soupapes de limitation de pression (16, 18), dans lequel du fluide sous pression peut être, à partir du réservoir de fluide sous pression (20), réaspiré dans le premier trajet d'écoulement (2) par la machine hydraulique (8) par le biais d'une première soupape de réaspiration (22) du circuit hydraulique raccordée fluidiquement entre le réservoir de fluide sous pression (20) et la première soupape de limitation de pression (16), et du fluide sous pression peut être, à partir du, réaspiré dans le deuxième trajet d'écoulement (4) par la machine hydraulique (8) par le biais d'une deuxième soupape de réaspiration (24) du circuit hydraulique raccordée fluidiquement entre le réservoir de fluide sous pression (20) et la deuxième soupape de limitation de pression (18) .

6. Circuit hydraulique selon l'une des revendications 1 à 5, dans lequel l'ensemble de soupapes (32, 34) est un ensemble de soupapes anti-retour (32, 34) et comprend une première soupape anti-retour (32) par le biais de laquelle la machine hydraulique supplémentaire (8) est raccordée au premier trajet d'écoulement (2) et laquelle est bloquée par le consommateur hydraulique (6) en direction de la machine hydraulique supplémentaire (26), et comprend une deuxième soupape anti-retour (34) par le biais de laquelle la machine hydraulique supplémentaire (26) est raccordée au deuxième trajet d'écoulement (4) et laquelle est bloquée par le consommateur hydraulique (6) en direction de la machine hydraulique supplémentaire (26), et dans lequel l'une des soupapes anti-retour (32, 34) peut être débloquée par du fluide sous pression d'un côté haute pression de la machine hydraulique supplémentaire (26).

7. Circuit hydraulique selon la revendication 6, dans lequel la machine hydraulique supplémentaire (26) est réalisée sous forme de pompe hydraulique à volume de refoulement constant et sens de rotation constant servant à l'entraînement du consommateur hydraulique (6) dans un premier sens de travail, dans lequel la première soupape anti-retour (32) peut être débloquée par le fluide sous pression du deuxième trajet d'écoulement (4).

8. Circuit hydraulique selon la revendication 6, dans lequel la machine hydraulique supplémentaire (26) peut fonctionner en tant que pompe hydraulique ou en tant que moteur hydraulique, et dans lequel les deux soupapes anti-retour (32, 34) de l'ensemble de soupapes anti-retour (32, 34) peuvent être débloquées respectivement par le fluide sous pression du côté haute pression respectif de la machine hydraulique supplémentaire (26).

9. Circuit hydraulique selon l'une des revendications 5 à 8, dans lequel du fluide sous pression peut être réaspiré par la machine hydraulique supplémentaire (26) dans un côté basse pression de la machine hydraulique supplémentaire (26) par le biais d'une soupape de réaspiration supplémentaire (36, 38) disposée fluidiquement entre le réservoir de fluide sous pression (20) et la machine hydraulique supplémentaire (26).

10. Circuit hydraulique selon l'une des revendications précédentes, dans lequel l'entraînement (28) associé à la machine hydraulique supplémentaire (26) est réalisé en tant que moteur électrique, moteur hydraulique, accumulateur cinétique ou composant de machine rotatif.

11. Circuit hydraulique selon l'une des revendications 2 à 10, dans lequel une transmission est prévue entre l'accouplement mécanique (30) et l'entraînement (28) associé à la machine hydraulique supplémentaire (26).

12. Ensemble hydraulique comprenant le circuit hydraulique selon l'une des revendications 1 à 11, **caractérisé en ce que** le circuit hydraulique comprend un consommateur hydraulique (6) qui peut être alimenté en fluide sous pression au moyen du circuit hydraulique.

13. Ensemble hydraulique selon la revendication 12, dans lequel le consommateur hydraulique (6) est réalisé sous forme de cylindre synchrone.

14. Utilisation d'un ensemble hydraulique selon la revendication 12 ou 13, dans laquelle l'ensemble hydraulique est utilisé dans une éolienne pour le réglage de rotors de l'éolienne, ou dans laquelle l'ensemble hydraulique est utilisé en tant que mécanisme de commande pour des soupapes de fluide.
